# EUROPEAN PATENT SPECIFICATION

(11) **EP 3 186 053 B1**
(45) Date of publication and mention of the grant of the patent: **14.10.2020**
(21) Application number: 15794315.0
(22) Date of filing: 27.08.2015
(51) Int. Cl.: B29C 33/48, B29C 45/26, B29C 45/44

(54) **SEGMENTED MOLDING CORE SYSTEM OF AN INJECTION MOULD, A METHOD OF INJECTION MOLDING A HOLLOW ARTICLES FORMED THEREBY**
SEGMENTIERTES KERNSYSTEM EINER SPRITZGUSSWERKZEUGES UND METHODES ZUM SPRITZGIESSEN EINES HOHLEN ARTIKELS
SYSTÈME D'UN NOYAU SEGMENTER D'UN MOULE PAR INJECTION ET PROCEDÉ DE MOULAGE PAR INJECTION UN PRODUIT CREUX

(30) Priority: 29.08.2014 US 201462043438 P
(43) Date of publication of application: 05.07.2017
(73) Proprietor: Keter Plastic Ltd., 4685205 Herzliya (IL)
(72) Inventor: HAIMOFF, Efraim, 9079502 Mevaseret Zion (IL); ASHER, Arie, 9091700 Givaa't Ze'ev (IL)
(74) Representative: Kramer, Dani
(86) International application number: PCT/IL2015/050861
(87) International publication number: WO 2016/030894

(56) References cited:
- EP-A1- 2 735 420
- US-A- 3 482 815
- US-A- 4 832 307
- US-A- 5 700 415

## Description

### TECHNOLOGICAL FIELD

The disclosed subject matter is directed to a mold and a core element, associated with an injection molding process, and in particular the disclosed subject matter is directed to a dynamic core system, for use in injection molding of articles having a distinct undercut. The disclosed subject matter further pertains to articles having a distinct undercut.

### BACKGROUND

A collapsible core for molding parts is known in the art and is described for example in US2006/0188602, US2009/01152770. US2006/0188602 discloses a two sleeve collapsible core. US2009/01152770 addresses a collapsible core for injection molding of hollow articles that have an internal undercut near opening. US3482815A relates to a collapsible core for a mold.

### GENERAL DESCRIPTION

The disclosed subject provides for a molding core system for use in molding, .e.g. injection molding, and is configured for molding hollow articles having a width of its opening substantially narrower than the articles' largest width extending between the opposite sides of the articles inner surface. The disclosed subject matter is further directed to a mold comprising the molding core system. In accordance with the disclosed subject matter, there is further disclosed an injection molded unitary article having a distinct internal undercut.

In accordance with the disclosed subject matter, the molding core system is assembled of a plurality of co-operable components that function together and are manipulable between a first molding position at which the core is fully deployed and a second position in which the core system is configured to axially retract and radially contract into a second, drawing position. The second drawing position facilitates removal of the injection molded article from the mold in accordance with the disclosed subject matter.

The system in accordance with the disclosed subject matter comprises an axially displaceable core pin and at least one of at least radially displaceable core segments extending around the central core, the outer shape of core system being substantially complementary to the inner shape of the molded article. In accordance with claim 1, the system comprises a plurality of core segments. The geometry of the outer shape can vary from a sphere, ellipsoid etc. to any polygonal shape such as a cuboid or more complex shapes having its largest diameter, i.e. the longest distance between two opposite walls defining the inner surface hollow space, substantially wider/longer than that of the opening of the article, e.g. a spherical zone having at least one base such as a 3/4 of a sphere or a sector of a sphere.

The core pin in accordance with an embodiment can be a cylinder having a substantially constant radius along its length, between its cap and base. In accordance with the disclosed subject matter, the core pin is at least partially retractable from the core system in a first axial direction, parallel to the central axis of the core system. In accordance with a specific embodiment, the core pin is fully retractable from the core system, such that upon its axial retraction thereof, volumetric space occupied thereby remains void.

The term "volumetric space" as defined herein refers to the space bounded by the outer perimeter of the core pin. The circumference of the volumetric space substantially corresponds in its dimensions to the outer circumferential shape of the core pin. In accordance with an embodiment, the core pin can have a circular cross section e.g. its volumetric space is that of an inscribing cylinder of the core in case of a substantially cylindrical shape and in a cross section it is the circumcircle which passes through all the vertices of the core pin. In accordance with an embodiment of the disclosed subject matter the radius of the circumcircle remaining substantially constant along the height of the core pin, such that the radius of the cylinder circumferencing (circum-cylinder) the core pin has a substantially constant diameter. Alternatively, the core pin can have any polygonal shape and the volumetric space defined thereby will be that defined by its general circumference.

In accordance with claim1, two or more of at least radially displaceable core segments extending around the central core comprise at least one group of dynamic segment member(s) configured for radial displacement towards the central axis of the core system. In accordance with the disclosed subject matter, the number of groups can vary from 1 to n as long as the total volumetric space of at least n minus 1 group when radially displaced towards the central axis of the core system does not exceed the volumetric space of the core pin, e.g. the space defined by its outer perimeter, when axially retracted. Each group can comprise any number of segments, as long as the above special relationship is maintained. It will be appreciated that the larger the ratio of diameter of the core pin to the largest diameter of the core system, the larger is the number of groups of dynamic segments that can be received within the space.

In accordance with claim1, at least one of the groups of the dynamic segment members can be further axially displaced in a direction opposite the axial direction of the core pin translation in the first axial direction.

In accordance with claim1, the core segments comprise a first group of dynamic segment members and a second group of dynamic segment members, all substantially circumferentially extending around the core pin. The outer surface of the core system, substantially conforming to the inner surface of the hollow article cavity. The first group of segment members are configured for radially translating in a direction towards the central axis of the core system, while the second group of dynamic segment members is configured for radially translating in a direction towards the central axis of the core system and further to axially translate in a direction opposite the direction of the retraction of the core pin. In accordance with an embodiment of the disclosed subject matter, the radial translation towards the axis and the axial translation of the second group can be performed substantially concurrently, i.e. in a combined motion. The movements of both groups can be provided concurrently, however the first group will be moved faster than the second group.

The number of groups of segment members can be more than one, as indicated hereinabove. In accordance with an embodiment of the disclosed subject matter the larger the number of segment members and/or groups comprising these, the smaller the diameter of the opening of the article that can be formed using the system of the disclosed subject matter. This is due to the design of the core system, e.g. the pin and the core segments that are such that, when the pin is retracted in a first direction along a central axis of the core system and the core pin, the core segments remain stationary relative to the translation of the core pin, the core pin is fully retracted, leaving the space occupied thereby void. The first group of secondary segments is allowed to radially translate in a direction towards the central axis. In accordance with the disclosed subject matter, the group can comprise any number of members from 1 to m, however, the total space occupied by segment(s) does not substantially exceed the volumetric space previously occupied by the core pin.

The second group of dynamic segment members in accordance with the disclosed subject matter radially moves generally in the direction of the central axis and concurrently translates axially in the second direction opposite to the first axial direction of the core pin, to extend substantially above the first group of the dynamic segment members. Thus allowing the article to be removed from the mold.

In accordance with one embodiment of the disclosed subject matter, the core pin and the core segments, form together a sphere segment having one base (e.g. 3/4 of a sphere). In accordance with an embodiment, the core pin is cylindrical and the secondary core segments are segments of a spherical ring, such that the central axis of the core and the sphere coincide. The core pin can be configured with a spherical end at its cap portion and have a substantially constant radius along the majority of its length. The core segments extend circumferentially around the core.

In operation of the core system, the core pin is retracted in a first axial direction along a central axis of the core pin, the core segments remain stationary relative to the translation of the core pin, the core pin is substantially fully retracted, leaving the space occupied thereby void. The core segments are then allowed to radially translate in a direction toward the central axis of the void space, such that at least some of the dynamic segment members are translated into the void space. This radial translation facilitates contraction of the core system, and thus removal of the molded article. In accordance with an embodiment of the disclosed subject matter, the at least one of the core segments is translated radially towards the central axis of the void space and further translated axially in a direction opposite the first direction. This radial and axial translations can be performed simultaneously or sequentially (e.g. inward and lengthwise movement), e.g. radial contraction of the core system followed by an axial translation of the second group.

In operation, this allows removing the injection molded hollow article away from the mold and removing it from the molding core system. The result of the radial contraction is that the largest diameter of the core assembly of the invention is substantially shrunk and collapsed and the article can be easily removed therefrom.

The number of alternately extending segment members in each group can be more than two.

The core pin radius may vary, such that the core pin has taper or uneven sidewalls. The core pin cap can have any desired geometry to conform to the desired shape of the article. In accordance with one example, the cap is rounded to conform to the semi spherical shape of the core system. In accordance with another example, the cap can have a flat end. The surface of the cap or the segments can be provided with corrugations, e.g. to form aesthetic effects of the final article.

The sidewalls of the core pin can be substantially smooth or can alternatively comprise grooves thereon to engage with components of the system, e.g. the secondary core segments, the retraction mechanism, etc.

The device also includes a base member having a plurality of engaging members, such as grooves, for engaging at least some of the core segments.

The core segments can each have an engaging member, such as a rail or a protrusion, that engages with a respective engaging member of the base member. The engaging members of the core segments and the engaging members of the base member are configured to allow the core segment members to translate both radially and axially.

In accordance with another embodiment of the disclosed subject matter there is provided an injection mold comprising a segmented mold base having a mold cavity corresponding to an outer shape of at least part of the molded article and a mold cover having a cavity corresponding to the remainder of the outer shape of the article. The segmented mold base comprises radially slidable mold segments. The mold comprises a molding core system in accordance with claim 1, comprising a plurality of co-operable components manipulable between a first molding position at which the core system is fully deployed and a second position in which the core system is configured to progressively axially retract and radially contract into a second retracted position, the outer shape of core system being substantially complementary to the inner shape of the molded article.

An injection mold in accordance with an embodiment of the disclosed subject matter comprising a segmented mold base having a mold cavity corresponding to an outer shape of at least part of the molded article and a mold cover having a cavity corresponding to the remainder of the outer shape of the article, the segmented mold base comprising radially slidable mold segments. The mold further comprising a core system comprising an axially displaceable core pin and a plurality of at least radially displaceable core segments extending around the core pin, the outer shape of core system being substantially complementary to the inner shape of the molded article.

In accordance with an embodiment of the disclosed subject matter the injection mold being operable in a first, injecting position, in which the core system is in a fully deployed configuration and the mold sliding segments form together a continuous inner surface of the mold cavity and a second position, in which the mold sliding segments are radially displaced and spaced apart and the core system is configured to progressively axially retract and radially contract into a second retracted position.

In accordance with yet an aspect of the disclosed subject matter, there is disclosed a method of injection molding a substantially hollow article having at least one opening substantially narrower than the articles largest width according to claim 12.

In accordance with an embodiment, in the second position, the core pin is axially displaced substantially retracting from the hollow cavity of the article and at least one of the at least one core segments is radially displaced towards the central axis.

This general description has been provided so that the nature of the disclosed subject matter can be generally. A more complete understanding of the invention can be obtained by reference to the following detailed description of the examples thereof in connection with the attached drawings.

### BRIEF DESCRIPTION OF THE DRAWINGS

In order to better understand the subject matter that is disclosed herein and to exemplify how it may be carried out in practice, embodiments will now be described, by way of non-limiting examples only, with reference to the accompanying drawings, in which:
**Fig. 1** is a top perspective view of an injection molded article formed using an injection mold in accordance with an example of the disclosed subject matter;
**Fig. 2** is a top perspective view of an injection mold assembly in accordance with the disclosed subject matter, in a first operative position;
**Fig. 3** is a cross section of the assembly of Fig. 2, taken along the line C-C;
**Fig. 4** is a top perspective view of an injection assembly in accordance with the disclosed subject matter, with the cover mold part removed from the mold base part;
**Fig. 5** is a top perspective view of the mold base part, with the article retained therein and in a first operative position;
**Fig. 6A** is a top perspective view of the mold base part of Fig. 5, with the article not shown;
**Fig. 6B** is a bottom perspective view of the assembly of Fig. 4, showing the cavity of the mold cover part;
**Figs. 7A** and **7B** illustrate a top plan view of the mold base part with the mold sliding members in a first position and a second, radially translated position, respectively;
**Fig. 8A** is a side cross sectional view of the mold base part on Fig. 7B;
**Fig. 8B** illustrates a base part of Fig. 8A, with the core system supporting slides, radially retracted;
**Fig. 8C** illustrates the base part of Fig. 8B with the core pin in a retracted position;
**Figs. 9A** and **9B** illustrate the core system in a side view with the mold base parts removed, in a first, fully deployed position and with a core pin in a retracted position;
**Fig. 10** is a top perspective view of the base mold of Fig. 8C;
**Fig. 11** illustrates the base mold of Fig. 10, with a first portion of the core segments, radially translated towards the central axis of the core system;
**Fig. 12A** is a top perspective view of the base mold of Fig. 11 with the second portion of core segments radially translated towards the central axis of the core system and further axially translated to extend above the first portion of the core segments;
**Fig. 12B** is similar to Fig. 12A, however with the base mold part sliding members and the core system translating members removed; and
**Fig. 12C** illustrates the transition of the second portion of the core segments from their first, fully deployed position as seen in Fig. 11 to the position of Fig. 12B, with the article presented thereon.

### DETAILED DESCRIPTION OF EMBODIMENTS

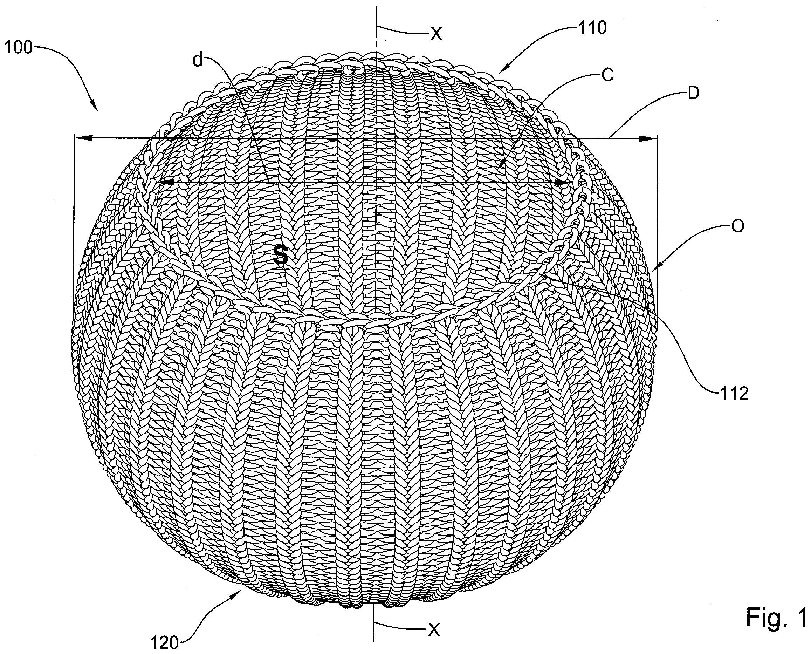

Attention is first directed to Fig. 1, illustrating an injection molded hollow article generally designated **100** in accordance with an example of the disclosed subject matter, the article having a longitudinal axis **X.** The article **100** is a hollow semi-sphere, having a top side **110** and a bottom side **120,** having a cavity **C** defined by an inner wall surface **S,** and further having an outer surface **O.** The article **100** comprises a sphere base at its top side **110** extending at the plane of the article rim **112** and defining an opening of the cavity **C.** The largest diameter of the article between the two opposite sides of the inner wall surface is denoted **D** and the diameter of the cavity opening is marked **d.** The relation between the diameters is D>d. as can be seen in the illustration, the undercut of the molded article is distinct and in this example the diameter ration is about 2:3. It will be appreciated that other ratios are also envisioned by the teachings of the disclosed subject matter. It will be further appreciated that while the present example illustrates a semi sphere, other sphere sectors can be molded in accordance with the disclosed subject matter with one or more openings and other geometrical shapes being further envisioned as part of the disclosed subject matter, e.g. a substantially hollow ellipsoid, a hollow polygon, a hollow cube having an opening at one of its faces, the width of the opening being narrower than that of the widest portion of the cavity of the article, i.e. having a substantially distinct undercut.

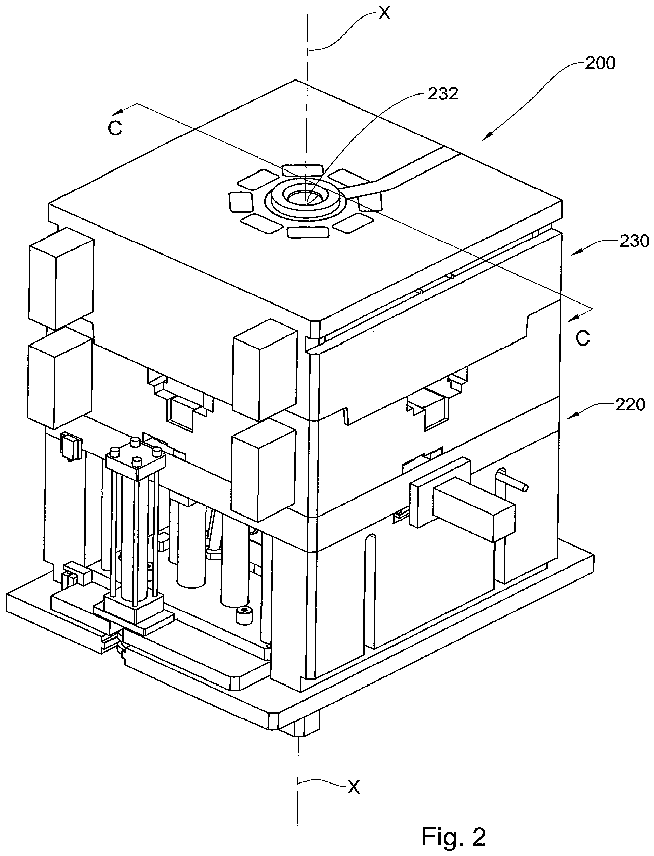

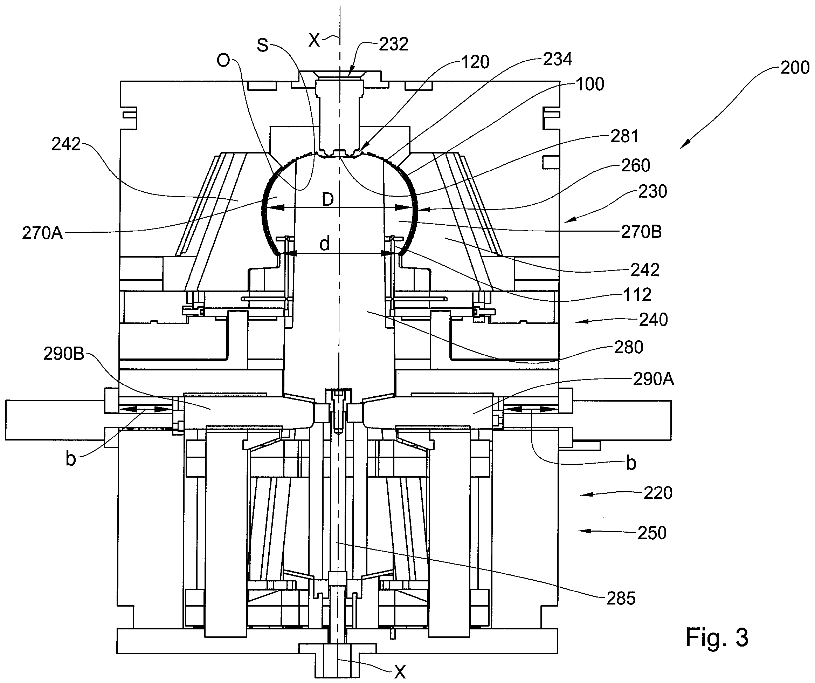

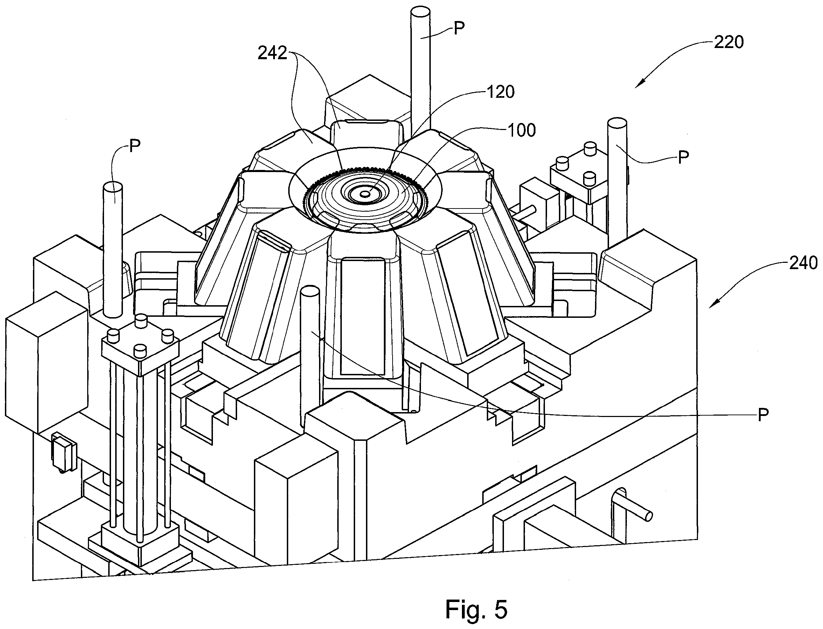

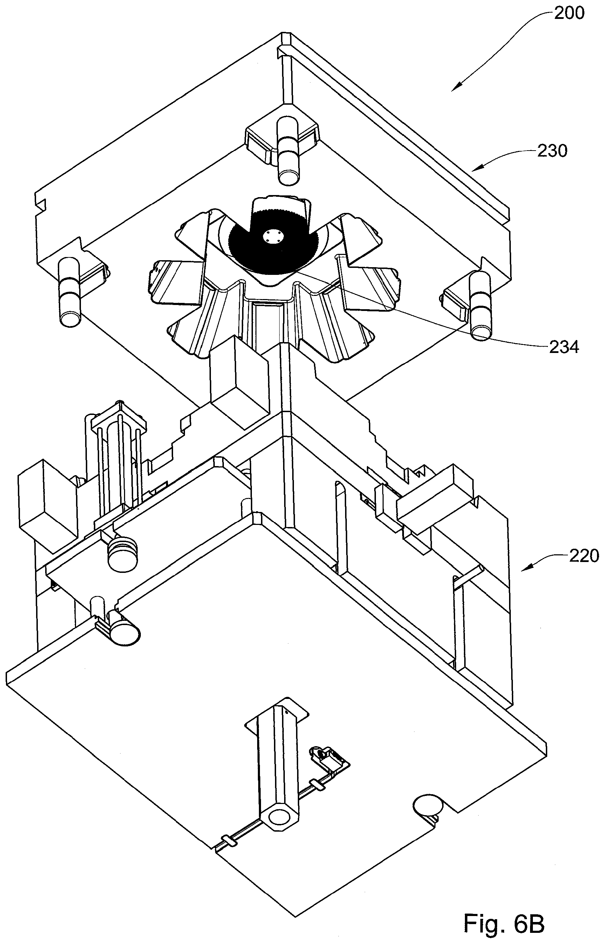

Figs. 2 and 3 illustrate the injection mold generally designated **200** in accordance with an example of the disclosed subject matter. The injection mold **200** comprises a mold base **220** and a mold cover **230,** with the injection port **232** extending substantially at the center of the cover **230.** The mold cover **230** comprises a cavity **234** corresponding to the shape of the bottom portion **120** of the outer surface **O** of the injected article **100,** and can be seen best in Fig. 6B. The mold base and the mold cover are engageable via lock pins **P** extending from the base mold (seen in Fig. 5). Figs. 2 and 3 illustrate the injection mold in its first operational position, during which the article **100** is injected (article seen as a thin dark line extending over the core system from its one side and enclosed by the mold base cavity and the mold cover cavity from its outer surface in Fig. 3, thus defining the outer surface thereof).

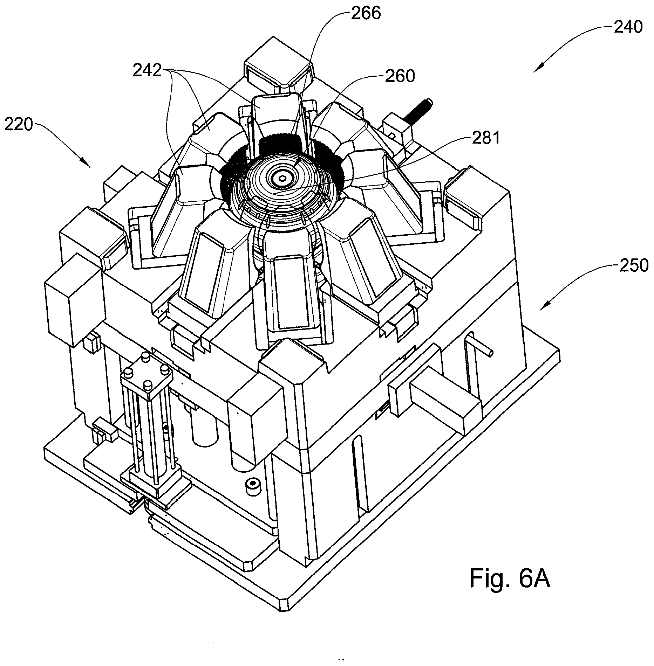

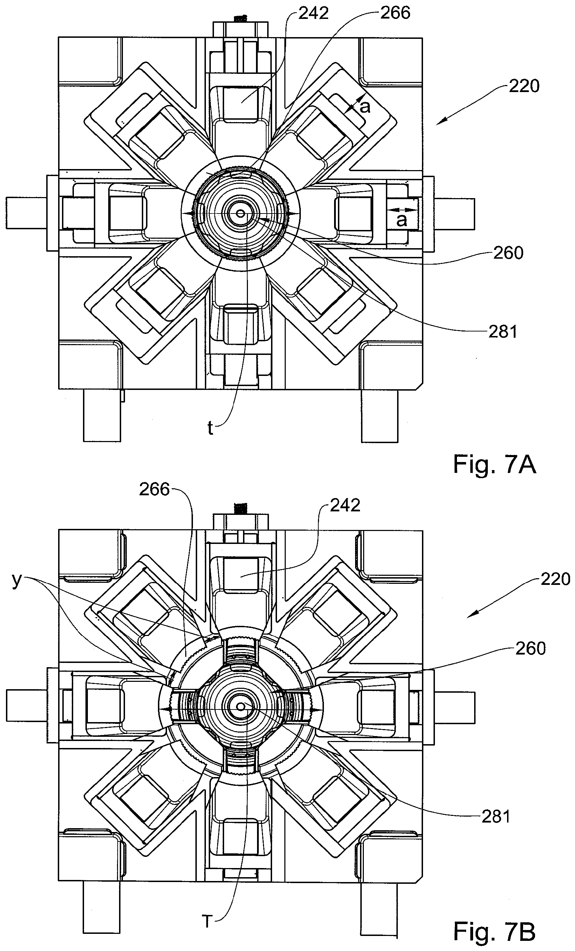

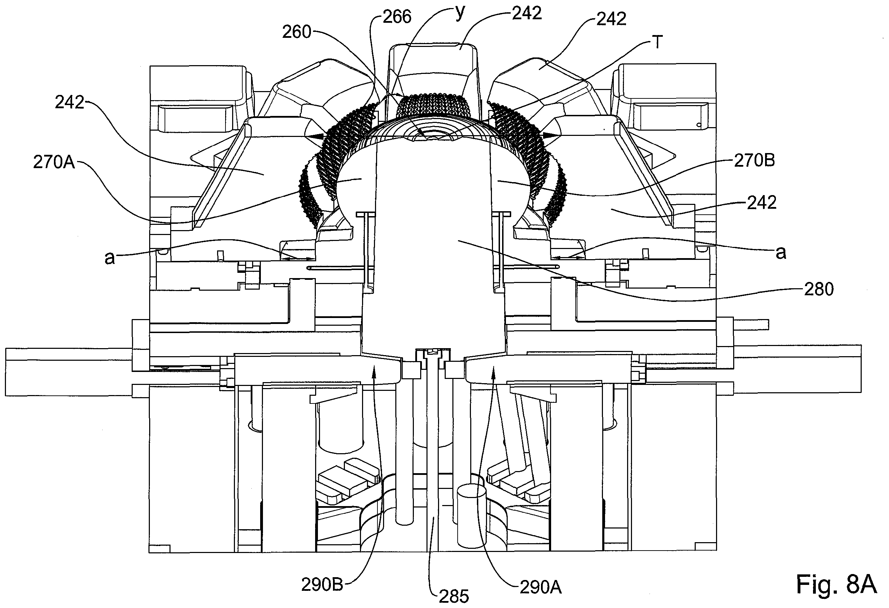

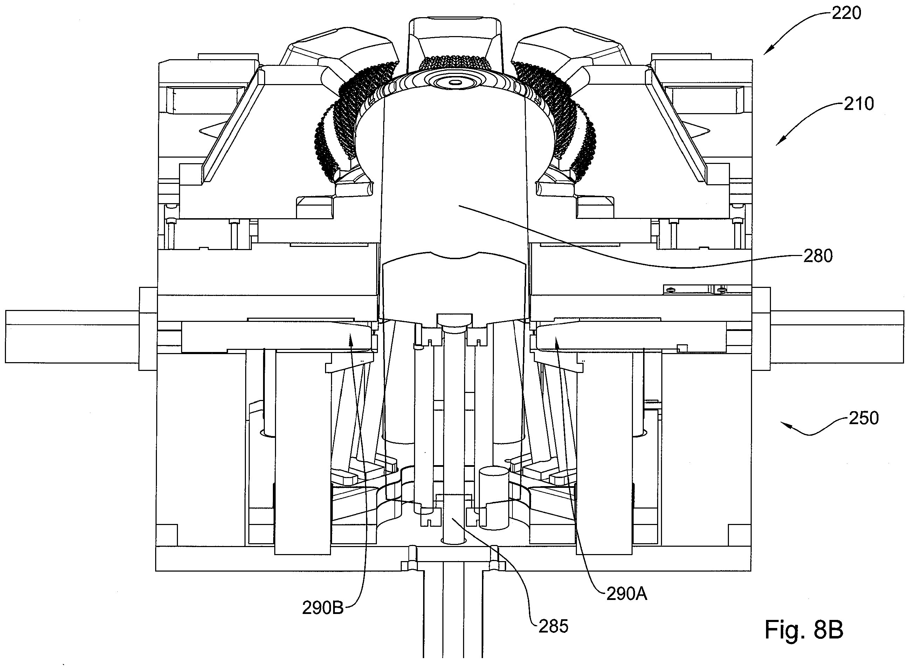

The mold base **220** comprises a top portion **240** (best seen in Figs. 6A and 7A and 7B) and a bottom portion **250** (also seen in Fig. 8B). The top portion of the base mold comprises a plurality of radially sliding mold segments **242,** seen in Fig. 3 in their first position in which the sliding mold segments **242** form together a cavity **260** (seen in Fig. 7A) corresponding to the outer surface of the article **100** and in this example further complimenting the cavity **234** of the cover mold **230.** As the article **100** has a curved outer side, it can be seen that the inner surface of the sliding mold segments are concave/arched to conform to the convex shape of the outer wall **O** of the article **100.** The sliding mold segments **242** are configured for sliding radially with respect to the central axis **X** of the mold as indicated by the arrows "**a**", and are further seen in their first operating position in Fig. 7A and in the second operation position in Figs. 7B and 8A, where the mold segments **242** are displaced away from the axis **X.**

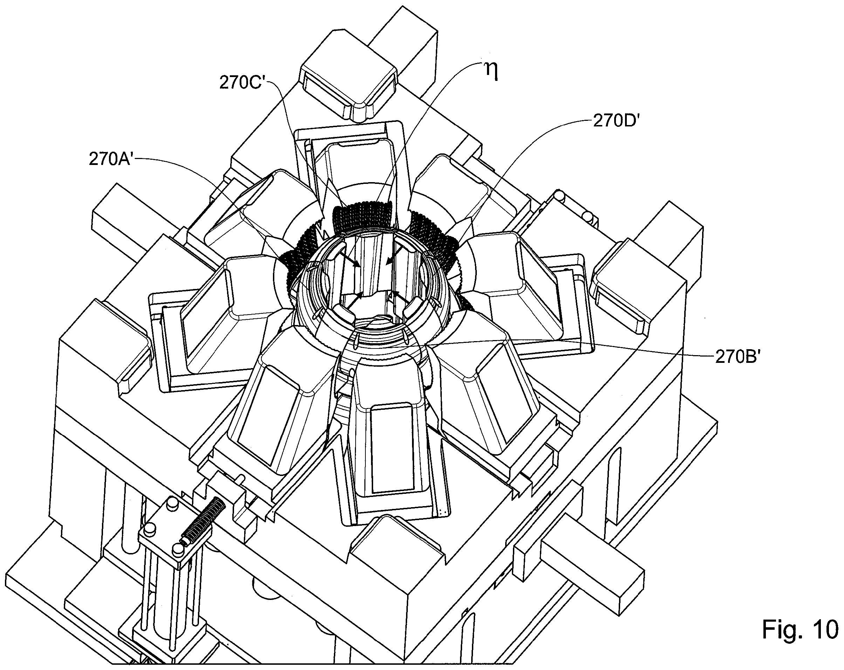

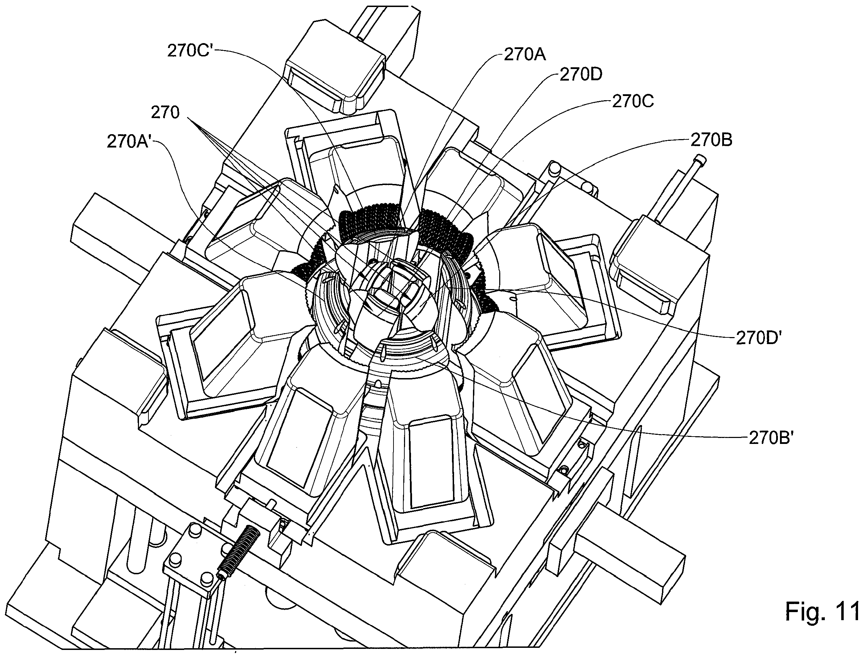

The central portion of the base mold **220** comprises a dynamic core system **260** comprising a core pin **280** and a plurality of core segments **270** (only two seen in cross section of Fig. 3, designated **270A** and **270B,** while the system comprises eight core segments, as seen in Figs. 10A and 11) extending around the core pin **280.** The outer surface of the core system corresponds to the inner shape and the inner surface S of the articles' hollow cavity. In accordance with this example, the widest diameter D of the hollow space of the article **100** corresponds and is substantially defined by the widest diameter of the core system and the diameter d of the opening is substantially defined by the core system diameter at the corresponding location. In this example the central axis of the core system **260** co-extends with the central longitudinal axis X of the mold **200.**

The core pin **280** is supported by a longitudinally extending support member **285,** further configured for axial displacement of the core pin. The core pin **280** is further provided with lateral grooves **282** extending on its surface (best seen in Figs, 9A and 9B), the grooves **282** being configured to engage laterally extending supports **284** extending at the bottom portion of the base mold for maintaining the position of the core pin **280** when in the axially retracted configuration, as will be discussed hereinbelow. It will be appreciated that the grooves over the core pin are optional and in accordance with examples of the disclosed subject matter the core pin can be smooth. The top end **281** of the core pin **280** corresponds in this example to the bottom side of the article's **100** inner cavity C. It will be appreciated, that the shape of the top end **281** of the core pin can vary to have any desired shape.

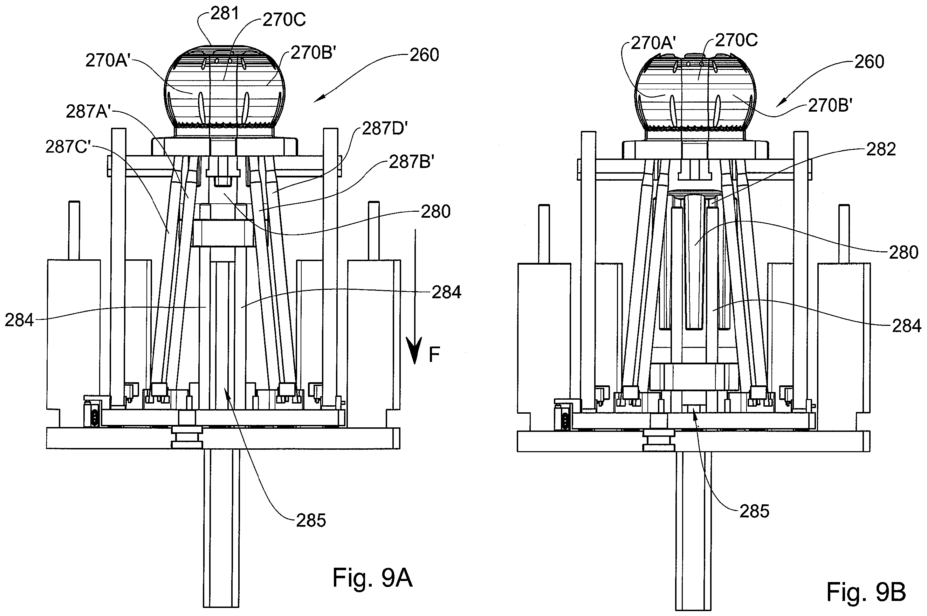

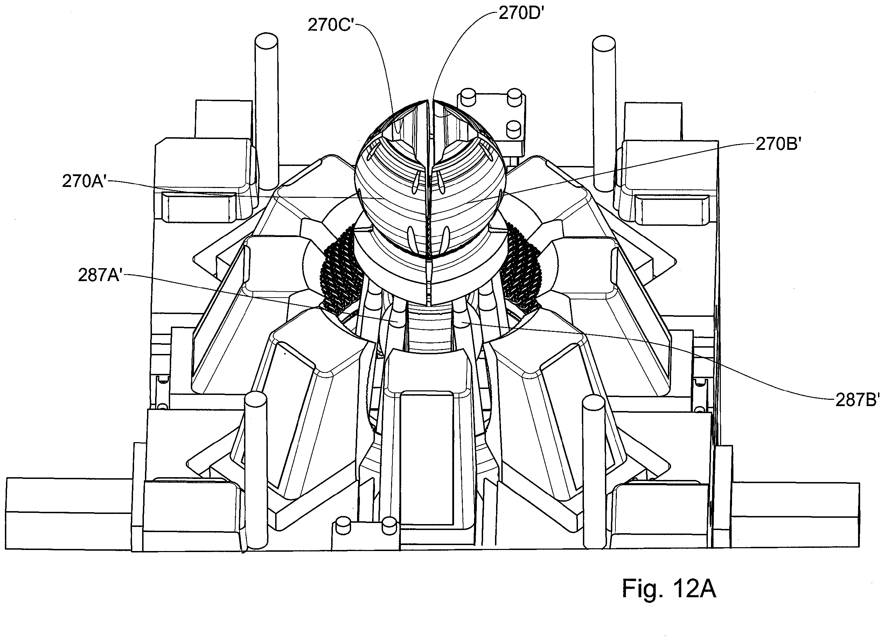

The core segments **270** are at least radially displaceable and in the present example comprise two groups of alternating segments, each group comprising four segments, best seen in Figs. 11 and 12A. In the illustrated example both groups are configured for radial displacement and one of the groups is further configured for axial displacement along the axis X. To substantially fully engage the core pin **280** in the first, fully deployed configuration, the core segments are provided with engaging members (not seen) configured to engage the core pin, e.g. through the grooves **282.** It will be appreciated that the segments can be devoid of any such engaging members. The first group of the core segments **270** comprises four radially translatable segments **270A, 270B, 270C** and **270D.** These segments are configured to radially translate on the top surface of the mold base in the direction substantially perpendicular to the central axis X. The four segments **270A', 270B', 270C'** and **270D'** of the second group (best seen e.g. in Figs. 9A and 9B and in 12A) are each supported over a translating member **287A, 287B, 287C** and **287D,** respectively. The translating members **287** are configured to translate the core segments **270'** radially and axially, as will be further discussed. It will be appreciated that the core segment can comprise any number of segments (1+n), with the segments being configured for radial displacement and further optional axial displacement of one or more of the segments.

The bottom portion of the mold base, comprises circumferentially extending support sliders **290A** and **290B** (in the current example two, although any other configuration of such slides can be utilized provided they perform similar function). The support slides are configured for extending under at least a portion of the core pin **280,** preventing unintentional displacement thereof, and are further configured to be slidably displaced along the arrow "b" to allow the core pin **280** to axially retract via the support member **285** towards the bottom portion **250** of the mold base. The axial direction of retraction is parallel with the central axis X.

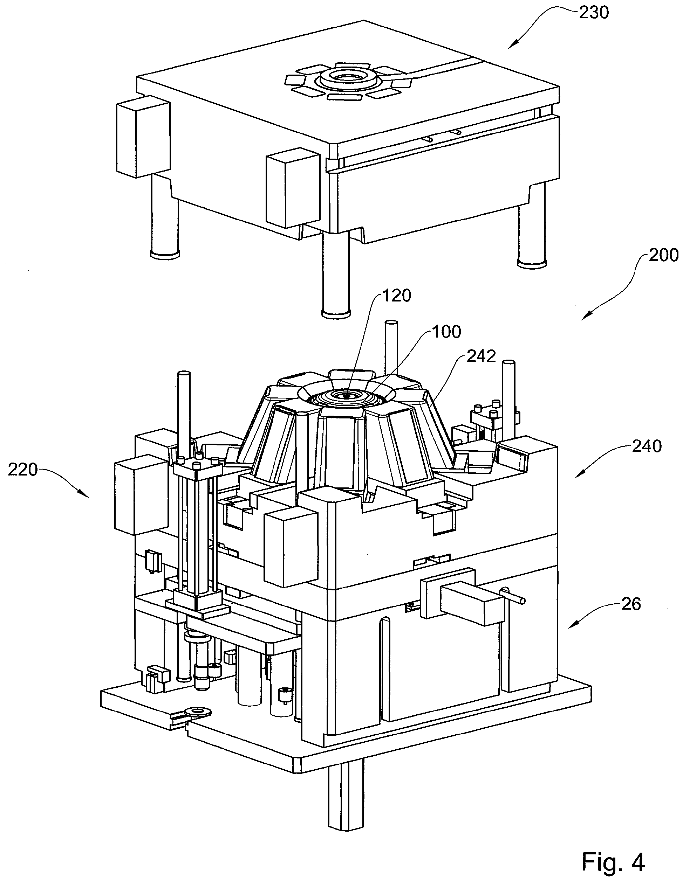

In operation, the molten material, e.g. plastic, is injected into the mold through the port **232** (in accordance with the invention the number of ports can vary) with the mold in a first operable position as seen in Fig. 3, and with the mold cover being connected to the mold base. In this first operable position, the dynamic core system is in its first, fully deployed position, where the core pin fully extends within the mold cavity with the core segments extending therearound. The core pin is supported and held in this position by the sliders **290** and the retractable support member **285**.The mold segments **242** extend to form a cavity together with the cavity of the cover mold conforming to the outer shape of the injected article. When the molten material is fully injected, the mold cover is removed from the base mold, as seen in Fig. 4. To release the article from the mold, the diameter t between the mold sliding segments is increased sufficiently to the largest diameter T conforming that of the article to pass through the edge of the mold cavity constituted by the mold segments (as seen in Fig. 5 and in Fig. 7B illustrating this broadening without the article). The diameter t is increased by spacing the edges of the slide members, the spacing denoted by y in Fig. 7B. As the article is hollow having a diameter D between opposite points of the inner surface S thereof substantially wider than that of the article's opening d, i.e. having a distinct undercut, the article cannot be removed at this stage. To facilitate the release of the article, the core system is actuated into a second drawing position.

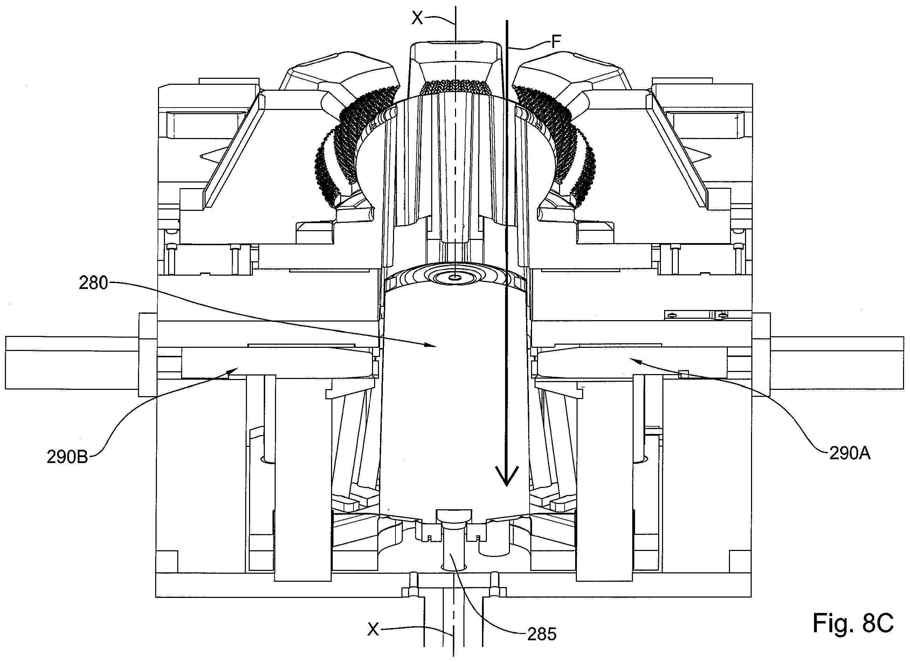

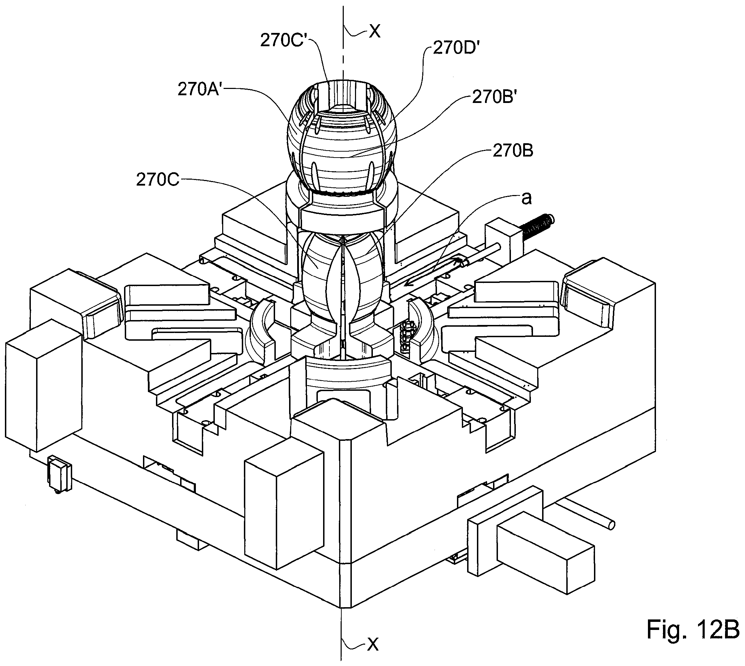

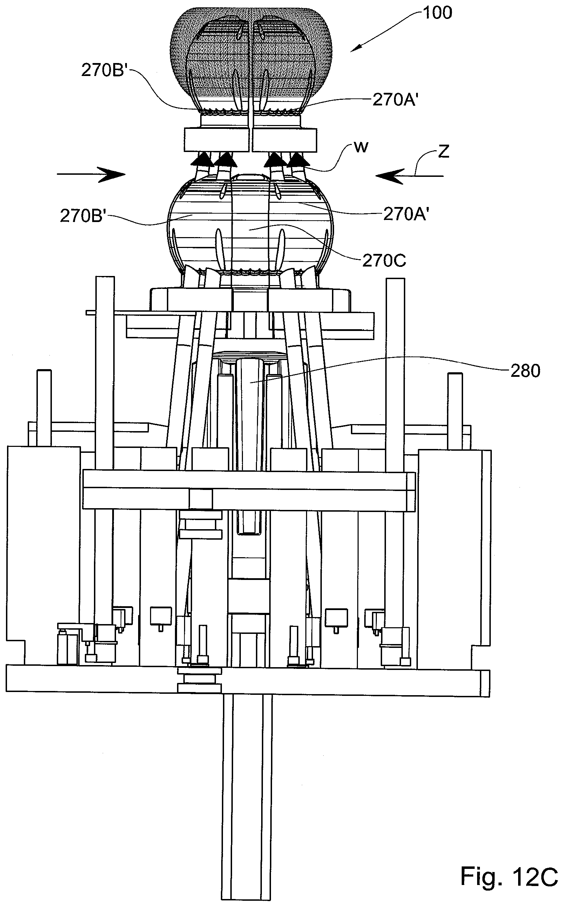

Figs. 8A to 12A sequentially illustrate the stages of core system actuation in accordance with an example of the disclosed subject matter. To facilitate retraction of the core pin **280,** the sliders **290A** and **290B** are radially translated away from the core pin (Fig. 8B), the core pin support member **285** is retracted, axially transporting the core pin **280** away from the core system **260** and into the bottom portion **250** of the mold base **240** in the direction of arrow F, parallel to the central axis X, as seen in Figs. 8C and 9B (it should be noted that the mold base in Figs. 9A and 9B was stripped of parts of the mold for ease of visualization of the core system). As the core pin **280** is retracted, the space occupied thereby is now void, as further seen in Fig. 10A. To translate the remainder of the core system **260** into the draw position, the first group of core segments is radially translated towards the central axis as illustrated by the arrows z in Fig. 10A, until the core segments of this group **270** are in contact with each other as seen in Fig. 11. At this stage, the article is still maintained in its first position by the second group of core segments **270'** (article not shown). The second group of core segments **270'** is in accordance with this example translated simultaneously radially towards the central axis and further axially to elevate the second group of core segments above the first group **270** (best seen in Fig. 12B in which the base mold was stripped of some of its part for ease of demonstration). This movement is achieved through the motion of the radially slidable support pistons (e.g. pneumatic pistons) which translate the segments radially and concurrently axially move over the first group of segments **270.** This translation of the second group **270'**, narrows the width of the core segments **270'** and thus of the core system **260**, to a width equal to or narrower than that of the opening, so as to facilitate the removal of the article from the mold. Fig. 12C illustrates sequentially the stages of translation of the second group **270'** of core segments in the direction of arrows W, which are in opposite direction to arrows, discussed above.

## Claims

1. A molding core system (260) comprising a plurality of co-operable components manipulable between a first molding position at which the core system (260) is fully deployed and a second drawing position in which the core system (260) is configured to axially retract and radially contract into the second drawing position, the outer shape of said core system (260) being substantially complementary to the inner shape of the molded hollow article (100), said core system (260) comprises an axially displaceable core pin (280) and at least one of at least radially displaceable core segments extending around the core pin (280), wherein the core segments comprise a first group of dynamic segment members (270) and a second group of dynamic segment members (270'), all substantially circumferentially extending around the core pin (280), wherein the outer surface of the core system (260), substantially conforming to the inner surface of the hollow article cavity and the first group of segment members (270) are configured for radially translating in a direction towards the central axis of the core system (260), while the second group of dynamic segment members (270') is configured for radially translating in a direction towards the central axis of the core system (260), **characterised in** the the second group of dynamic segment members (270') is further configured to axially translate in a direction opposite the direction of the retraction of the core pin (280), optionally wherein the radial translation towards the axis and the axial translation of the second group (270') is performed substantially concurrently in a combined motion where the first group (270) moves faster than the second group (270').

2. The molding core system of claim 1, wherein the core pin (280) is displaceable in a first axial direction and at least one of the core segments is further configured for axial displacement in an opposite, second axial direction.

3. The molding core system of claim 1 or 2, wherein the at least one of the core segments is simultaneously displaced radially and axially in the second axial direction.

4. The molding core system of any one of the previous claims, wherein the system comprises a plurality of core segments.

5. The molding core system of any one of the previous claims, wherein the geometry of the outer shape has its largest diameter, substantially wider/longer than that of the opening of the article (100).

6. The molding core system of any one of the previous claims, wherein the core pin (280) has a substantially constant radius along its length, between its cap and base.

7. The molding core system of any one of the previous claims, wherein the core pin (280) is at least partially retractable from the core system (260) in a first axial direction, parallel to the central axis of the core system (260).

8. The molding core system of any one of the previous claims, wherein the core pin (280) is fully retractable from the core system (260), such that upon its axial retraction thereof, volumetric space occupied thereby remains void.

9. The molding core system of any one of the previous claims, wherein two or more of at least radially displaceable core segments (270) extending around the central core comprise at least one group of dynamic segment members configured for radial displacement towards the central axis of the core system (260), optionally (i) wherein the number of groups can vary from 1 to n as long as the total volumetric space of at least n minus 1 group when radially displaced towards the central axis of the core system (260) does not exceed the volumetric space of the core pin (280) when axially retracted and wherein each group can comprise any number of segments maintaining the spatial relationship, and/or (ii) wherein at least one of the groups of the dynamic segment members is axially displacable in a direction opposite the axial direction of the core pin (280) translation in the first axial direction.

10. The molding core system of any one of the previous claims, wherein the core pin (280) and the core segments, form together a sphere segment having one base such that the core pin (280) is cylindrical and the secondary core segments (270') are segments of a spherical ring and extend circumferentially around the core pin (280), such that the central axis of the core and the sphere coincide.

11. An injection mold (200) comprising a segmented mold base (220) having a mold cavity corresponding to an outer shape of at least part of the molded article (100) and a mold cover (230) having a cavity corresponding to the remainder of the outer shape of the article, the segmented mold base (220) comprising radially slidable mold segments (242), the mold (200) further comprising a molding core system (260) according to any one of claims 1 to 10.

12. A method of injection molding a substantially hollow article (100) having at least one opening substantially narrower than the articles largest width, comprising:
providing a mold (200) comprising a mold base (220), a mold cover (230), wherein the cavity extending within the mold base (220) and the cover (230) correspond to the outer surface of the article (100) and a molding core system (260) having a central longitudinal axis extending therethrough, the molding core system (260) being according to any one of claims 1 to 10;
injecting a molten material into the mold (200) wherein the core system (260) is at its first operable position in which the molding core system (260) is in a fully deployed position, where the mold cover (230) is covering the mold base (220) with the molding core system (260) extending therebetween;
releasing the cover (230) of the mold base (220);
translating the molding core system (260) into a second position, in which the molding core system (260) is configured to axially retract and radially contract into a second drawing position; and
removing the article (100) from the mold (200).

## Patentansprüche

1. Formkernsystem (260), das eine Vielzahl von kooperierbaren Komponenten umfasst, die zwischen einer ersten Formposition, in der das Kernsystem (260) vollständig entfaltet ist, und einer zweiten Ziehposition, in der das Kernsystem (260) dafür konfiguriert ist, sich axial zurückzuziehen und radial in die zweite Ziehposition zusammenzuziehen, manipulierbar sind, wobei die äußere Form des Kernsystems (260) im Wesentlichen komplementär zur inneren Form des geformten hohlen Gegenstands (100) ist, wobei das Kernsystem (260) einen axial verschiebbaren Kernstift (280) und mindestens eines von mindestens radial verschiebbaren Kernsegmenten umfasst, die sich um den Kernstift (280) erstrecken, wobei die Kernsegmente eine erste Gruppe dynamischer Segmentelemente (270) und eine zweite Gruppe dynamischer Segmentelemente (270') umfassen, die sich alle im Wesentlichen in Umfangsrichtung um den Kernstift (280) erstrecken; wobei die Außenfläche des Kernsystems (260), die im Wesentlichen der Innenfläche des Hohlraums des hohlen Gegenstands entspricht, und die erste Gruppe von Segmentelementen (270) dafür konfiguriert sind, sich radial in Richtung der Mittelachse des Kernsystems (260) zu verschieben, während die zweite Gruppe dynamischer Segmentelemente (270') dafür konfiguriert ist, sich radial in Richtung der Mittelachse des Kernsystems (260) zu verschieben, **dadurch gekennzeichnet, dass** die zweite Gruppe dynamischer Segmentelemente (270') ferner dafür konfiguriert ist, sich axial in eine Richtung zu verschieben, die der Richtung des Zurückziehens des Kernstifts (280) entgegengesetzt ist; optional, wobei die radiale Verschiebung in Richtung der Achse und die axiale Verschiebung der zweiten Gruppe (270') im Wesentlichen gleichzeitig in einer kombinierten Bewegung ausgeführt wird, in der sich die erste Gruppe (270) schneller als die zweite Gruppe (270') bewegt.

2. Formkernsystem nach Anspruch 1, wobei der Kernstift (280) in einer ersten axialen Richtung verschiebbar ist und mindestens eines der Kernsegmente ferner für eine axiale Verschiebung in einer entgegengesetzten zweiten axialen Richtung konfiguriert ist.

3. Formkernsystem nach Anspruch 1 oder 2, wobei das mindestens eine der Kernsegmente gleichzeitig radial und axial in der zweiten axialen Richtung verschoben wird.

4. Formkernsystem nach einem der vorhergehenden Ansprüche, wobei das System eine Vielzahl von Kernsegmenten umfasst.

5. Formkernsystem nach einem der vorhergehenden Ansprüche, wobei die Geometrie der Außenform ihren größten Durchmesser hat, der wesentlich breiter/länger als der der Öffnung des Gegenstands (100) ist.

6. Formkernsystem nach einem der vorhergehenden Ansprüche, wobei der Kernstift (280) entlang seiner Länge zwischen seiner Kappe und seiner Basis einen im wesentlichen konstanten Radius aufweist.

7. Formkernsystem nach einem der vorhergehenden Ansprüche, wobei der Kernstift (280) in einer ersten axialen Richtung parallel zur Mittelachse des Kernsystems (260) zumindest teilweise von dem Kernsystem (260) einziehbar ist.

8. Formkernsystem nach einem der vorhergehenden Ansprüche, wobei der Kernstift (280) vollständig von dem Kernsystem (260) zurückgezogen werden kann, so dass bei seinem axialen Zurückziehen der dadurch belegte Volumenraum leer bleibt.

9. Formkernsystem nach einem der vorhergehenden Ansprüche, wobei zwei oder mehr von mindestens radial verschiebbaren Kernsegmenten (270), die sich um den zentralen Kern erstrecken, mindestens eine Gruppe dynamischer Segmentelemente umfassen, die für eine radiale Verschiebung in Richtung der Mittelachse des Kernsystems (260) konfiguriert sind, optional (i) wobei die Anzahl der Gruppen von 1 bis n variieren kann, solange der gesamte Volumenraum der mindestens n minus 1 Gruppe, wenn er radial zur Mittelachse des Kernsystems (260) verschoben ist, den Volumenraum des Kernstifts (280) beim axialen Einfahren nicht überschreitet, wobei jede Gruppe eine beliebige Anzahl von Segmenten umfassen kann, die die räumliche Beziehung aufrechterhalten, und/oder (ii) wobei mindestens eine der Gruppen der dynamischen Segmentelemente in einer Richtung entgegengesetzt zur axialen Richtung der Verschiebung des Kernstifts (280) in der ersten axialen Richtung axial verschiebbar ist.

10. Formkernsystem nach einem der vorhergehenden Ansprüche, wobei der Kernstift (280) und die Kernsegmente zusammen ein Kugelsegment mit einer Basis bilden, so dass der Kernstift (280) zylindrisch ist und die sekundären Kernsegmente (270') Segmente eines Kugelrings sind und sich in Umfangsrichtung um den Kernstift (280) erstrecken, so dass die Mittelachse des Kerns und der Kugel übereinstimmt.

11. Spritzgussform (200), die Folgendes umfasst: eine segmentierte Formbasis (220) mit einem Formhohlraum, der einer Außenform von mindestens einem Teil des Formgegenstands (100) entspricht, und eine Formabdeckung (230) mit einem Hohlraum, der dem Rest der äußeren Form des Gegenstands entspricht, wobei die segmentierte Formbasis (220) radial verschiebbare Formsegmente (242) umfasst, wobei die Form (200) ferner ein Formkernsystem (260) gemäß einem der Ansprüche 1 bis 10 umfasst.

12. Verfahren zum Spritzgießen eines im Wesentlichen hohlen Gegenstands (100) mit mindestens einer Öffnung, die wesentlich schmaler als die größte Breite des Gegenstands ist, wobei das Verfahren Folgendes umfasst:
Bereitstellen einer Form (200), die eine Formbasis (220) und eine Formabdeckung (230) umfasst, wobei der Hohlraum, der sich innerhalb der Formbasis (220) und der Abdeckung (230) erstreckt, der Außenfläche des Gegenstands (100) entspricht und ein Formkernsystem (260) eine sich dadurch erstreckende zentrale Längsachse aufweist, wobei das Formkernsystem (260) einem der Ansprüche 1 bis 10 entspricht;
Einspritzen eines geschmolzenen Materials in die Form (200), wobei sich das Kernsystem (260) an seiner ersten betriebsfähigen Position befindet, in der sich das Formkernsystem (260) in einer vollständig ausgefahrenen Position befindet, wobei die Formabdeckung (230) die Formbasis (220) mit dem dazwischen verlaufenden Formkernsystem (260) bedeckt;
Lösen der Abdeckung (230) der Formbasis (220);
Verschieben des Formkernsystems (260) in eine zweite Position, in der das Formkernsystem (260) dafür konfiguriert ist, sich axial zurückzuziehen und radial in eine zweite Ziehposition zusammenzuziehen; und
Entfernen des Gegenstands (100) aus der Form (200).

## Revendications

1. Système de noyau de moulage (260) comprenant une pluralité de composants coopérants manipulables entre une première position de moulage dans laquelle le système de noyau (260) est entièrement déployé et une seconde position de démoulage dans laquelle le système de noyau (260) est configuré pour se rétracter axialement et se contracter radialement dans la seconde position de démoulage, la forme extérieure dudit système de noyau (260) étant sensiblement complémentaire de la forme intérieure de l'article creux moulé (100), ledit système de noyau (260) comprend une broche de noyau déplaçable axialement (280) et au moins l'un de segments de noyau au moins radialement déplaçables s'étendant autour de la broche de noyau (280), dans lequel les segments de noyau comprennent un premier groupe d'éléments de segments dynamiques (270) et un second groupe d'éléments de segments dynamiques (270'), tous s'étendant sensiblement circonférentiellement autour de la broche de noyau (280), dans lequel la surface extérieure du système de noyau (260), se conformant sensiblement à la surface intérieure de la cavité de l'article creux et le premier groupe d'éléments de segments (270) sont configurés pour se translater radialement dans une direction vers l'axe central du système de noyau (260), tandis que le second groupe d'éléments de segments dynamiques (270') est configuré pour se translater radialement dans une direction vers l'axe central du système de noyau (260), **caractérisé en ce que** le second groupe d'éléments de segments dynamiques (270') est en outre configuré pour se translater axialement dans une direction opposée à la direction de la rétraction de la broche de noyau (280), éventuellement dans lequel la translation radiale vers l'axe et la translation axiale du second groupe (270') sont exécutées sensiblement simultanément dans un mouvement combiné où le premier groupe (270) se déplace plus rapidement que le second groupe (270').

2. Système de noyau de moulage selon la revendication 1, dans lequel la broche de noyau (280) peut être déplacée dans une première direction axiale et au moins l'un des segments de noyau est en outre configuré pour un déplacement axial dans une seconde direction axiale opposée.

3. Système de noyau de moulage selon la revendication 1 ou 2, dans lequel le au moins un des segments de noyau est déplacé simultanément radialement et axialement dans la seconde direction axiale.

4. Système de noyau de moulage selon l'une quelconque des revendications précédentes, dans lequel le système comprend une pluralité de segments de noyau.

5. Système d'âme de moulage selon l'une quelconque des revendications précédentes, dans lequel la géométrie de la forme extérieure a son plus grand diamètre sensiblement plus large/plus long que celui de l'ouverture de l'article (100) .

6. Système de noyau de moulage selon l'une quelconque des revendications précédentes, dans lequel la broche de noyau (280) a un rayon sensiblement constant sur toute sa longueur, entre sa tête et sa base.

7. Système de noyau de moulage selon l'une quelconque des revendications précédentes, dans lequel la broche de noyau (280) est au moins partiellement rétractable du système de noyau (260) dans une première direction axiale, parallèle à l'axe central du système de noyau (260).

8. Système de noyau de moulage selon l'une quelconque des revendications précédentes, dans lequel la broche de noyau (280) est entièrement rétractable du système de noyau (260), de sorte que lors de sa rétraction axiale de celui-ci, l'espace volumétrique occupé par celle-ci reste vide.

9. Système de noyau de moulage selon l'une quelconque des revendications précédentes, dans lequel deux segments de noyau au moins radialement déplaçables (270) ou plus s'étendant autour du noyau central comprennent au moins un groupe d'éléments de segments dynamiques configurés pour un déplacement radial vers l'axe central du système de noyau (260), éventuellement (i) dans lequel le nombre de groupes peut varier de 1 à n tant que l'espace volumétrique total d'au moins n moins 1 groupe lorsqu'ils sont déplacés radialement vers l'axe central du système de noyau (260) n'excède pas l'espace volumétrique de la broche de noyau (280) lorsqu'elle est rétractée axialement, et dans lequel chaque groupe peut comprendre n'importe quel nombre de segments maintenant la relation spatiale, et/ou (ii) dans lequel au moins l'un des groupes des éléments de segments dynamiques est déplaçable axialement dans une direction opposée à la direction axiale de la translation de la broche de noyau (280) dans la première direction axiale.

10. Système de noyau de moulage selon l'une quelconque des revendications précédentes, dans lequel la broche de noyau (280) et les segments de noyau forment ensemble un segment de sphère ayant une base de telle sorte que la broche de noyau (280) est cylindrique et les segments de noyau secondaires (270') sont des segments d'un anneau sphérique et s'étendent circonférentiellement autour de la broche de noyau (280), de sorte que l'axe central du noyau et celui de la sphère coïncident.

11. Moule d'injection (200) comprenant une base de moule segmentée (220) ayant une cavité de moule correspondant à une forme extérieure d'au moins une partie de l'article moulé (100) et un couvercle de moule (230) ayant une cavité correspondant au reste de la forme extérieure de l'article, la base de moule segmentée (220) comprenant des segments de moule coulissants radialement (242), le moule (200) comprenant en outre un système de noyau de moulage (260) selon l'une quelconque des revendications 1 à 10.

12. Procédé de moulage par injection d'un article sensiblement creux (100) ayant au moins une ouverture sensiblement plus étroite que la plus grande largeur de l'article, comprenant de :
fournir un moule (200) comprenant une base de moule (220), un couvercle de moule (230), dans lequel la cavité s'étendant à l'intérieur de la base de moule (220) et le couvercle (230) correspondent à la surface extérieure de l'article (100), et un système de noyau de moulage (260) ayant un axe longitudinal central s'étendant à travers celui-ci, le système de noyau de moulage (260) étant selon l'une quelconque des revendications 1 à 10;
injecter un matériau fondu dans le moule (200), dans lequel le système de noyau (260) est dans sa première position fonctionnelle dans laquelle le système de noyau de moulage (260) est dans une position entièrement déployée, où le couvercle de moule (230) recouvre la base de moule (220) avec le système de noyau de moulage (260) s'étendant entre eux;
retirer le couvercle (230) de la base de moule (220) ;
translater le système de noyau de moulage (260) dans une seconde position, dans laquelle le système de noyau de moulage (260) est configuré pour se rétracter axialement et se contracter radialement dans une seconde position de démoulage; et
retirer l'article (100) du moule (200).
